# EUROPÄISCHE PATENTSCHRIFT

(11) **EP 2 372 116 B1**
(45) Veröffentlichungstag und Bekanntmachung des Hinweises auf die Patenterteilung: **28.09.2016**
(21) Anmeldenummer: 11158096.5
(22) Anmeldetag: 14.03.2011
(51) Int. Cl.: F01K 23/10, F01K 13/02, F01K 13/00, F01K 3/24

(54) **Verfahren zum Betrieb eines integrierten Solar-Kombikraftwerks sowie Solar-Kombikraftwerk zur Durchführung des Verfahrens**
Method of operating an integrated solar combined cycle power plant and solar combined cycle power plant for carrying out the method
Procédé de fonctionnement d'une centrale solaire à cycle combinée intégrée et centrale solaire à cycle combinée intégrée destinée à exécuter le procédé

(30) Priorität: 26.03.2010 CH 4482010
(43) Veröffentlichungstag der Anmeldung: 05.10.2011
(73) Patentinhaber: General Electric Technology GmbH, 5400 Baden (CH)
(72) Erfinder: Carroni, Richard, 5443 Niederrohrdorf (CH); Pedretti, Camille, 5430 Wettingen (CH); Dalla Piazza, Thomas, 2560 Nidau (CH); Drouvet, Paul Pierre Antoine, 68330 Huningue (FR)
(74) Vertreter: General Electric Technology GmbH

(56) Entgegenhaltungen:
- WO-A1-95/11371
- DE-B3-102008 051 384
- DE-B9- 10 144 841
- GB-A- 2 449 181
- FRAIDENRAICH N ET AL: "OPTIMIZATION OF GAS-TURBINE COMBINED CYCLES FOR SOLAR ENERGY AND ALTERNATIVE-FUEL POWER GENERATION", SOLAR ENERGY, PERGAMON PRESS. OXFORD, GB, Bd. 48, Nr. 5, 1. Januar 1992 (1992-01-01) , Seiten 301-307, XP000267248, ISSN: 0038-092X, DOI: DOI:10.1016/0038-092X(92)90058-I
- RHEINLAENDER J ET AL: "GUD-KRAFTWERK MIT INTEGRIERTEM SOLARSYSTEM", BWK BRENNSTOFF WARME KRAFT, SPRINGER VDI VERLAG, DUSSELDORF, DE, Bd. 53, Nr. 6, 1. Juni 2001 (2001-06-01), Seiten 55-58, XP001065946, ISSN: 1618-193X

## Beschreibung

### TECHNISCHES GEBIET

Die vorliegende Erfindung bezieht sich auf das Gebiet der Kraftwerkstechnik. Sie betrifft ein Verfahren zum Betrieb eines integrierten Solar-Kombikraftwerks mit einem Wasser-Dampf-Kreislauf und einem Solarfeld, wobei der Wasser-Dampf-Kreislauf eine Dampfturbine und einen Abhitzedampferzeuger umfasst und dem Wasser-Dampf-Kreislauf zusätzliche Wärme aus einem Solarfeld zugeführt wird. Die Erfindung betrifft zudem ein Solar-Kombikraftwerk zur Durchführung des Verfahrens.

Ein solches Solar-Kombikraftwerk ist z.B. in Dokument DE 101 44 841 B9 offenbart.

### STAND DER TECHNIK

Durch die Integration von solar erzeugter Leistung in Kombikraftwerke mit einer Gasturbine und einem Wasser-Dampf-Kreislauf zu einem integrierten Solar-Kombikraftwerk (Integrated Solar Combined Cycle ISCC) kann der CO2-Abdruck solcher Kraftwerkseinrichtungen verkleinert werden. Solarthermische Lösungen eignen sich dabei - im Unterschied zu Photovoltaik-Technologien - besonders gut für eine solche Integration. Solche Lösungen zeichnen sich dadurch aus, dass die Solarenergie dazu verwendet wird, um direkt oder indirekt Dampf (sogenannten Solardampf) zu erzeugen, der in einem Kombikreislauf mit Gasturbine auf unterschiedliche Weise eingesetzt werden kann. Eine bevorzugte Art und Weise besteht darin, den Solardampf zum Wasser-Dampf-Kreislauf (Water Steam Cycle WSC) hinzuzufügen, anstatt ihn in der Gasturbine selbst zu verwenden. Weiterhin wird der Solardampf bevorzugt in Solarfeldern erzeugt, die mit Parabolrinnen-Kollektoren bestückt sind.

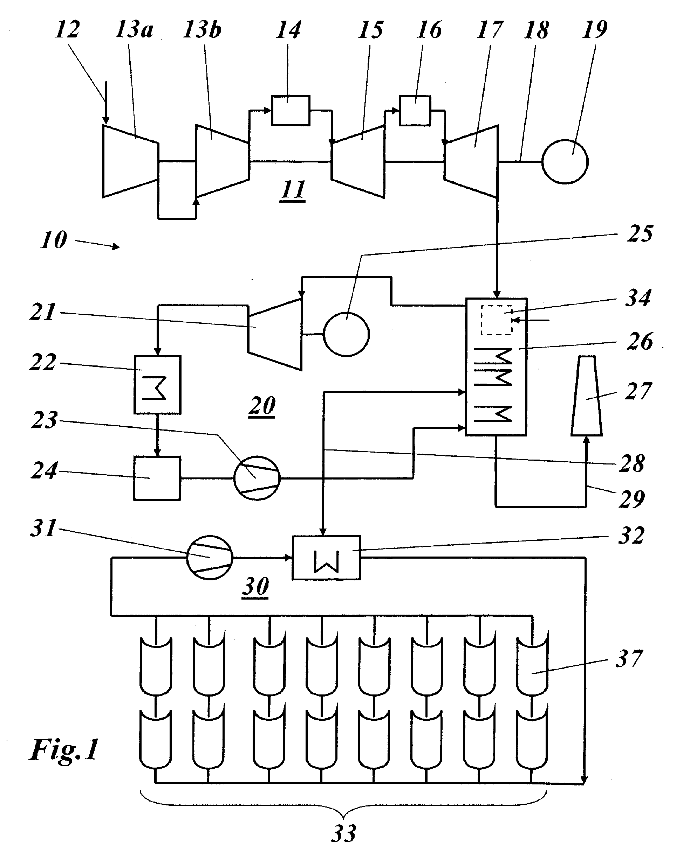

Ein beispielhaftes, stark vereinfachtes Anlagenschema eines solchen integrierten Solar-Kombikraftwerks ist in Fig. 1 wiedergegeben. Das integrierte Solar-Kombikraftwerk 10 der Fig. 1 umfasst eine Gasturbine 11 mit sequentieller Verbrennung, einen Wasser-Dampf-Kreislauf 20 mit einer Dampfturbine 21, und einen Solarkreislauf 30 mit einem Solarfeld 33. Die Gasturbine 11 besteht im vorliegenden Beispiel aus zwei hintereinander geschalteten Verdichtern 13a, 13b, die über einen Lufteinlass 12 angesaugte Verbrennungsluft verdichten und zur Verbrennung eines Brennstoffs an eine erste Brennkammer 14 abgeben. Das erzeugte Heissgas wird in einer ersten Turbine 15 unter Arbeitsleistung entspannt, in einer zweiten Brennkammer 16 noch einmal erhitzt und durch eine zweite Turbine 17 geleitet. Verdichter 13a, 13b und Turbinen 15, 17 sind über eine Welle 18 mit einem Generator 19 verbunden.

Das aus der zweiten Turbine 17 austretende, immer noch heisse Abgas wird durch einen Abhitzedampferzeuger (Heat Recovery Steam Generator HRSG) 26 geleitet, wo es Dampf für den Wasser-Dampf-Kreislauf 20 erzeugt, in den der Abhitzedampferzeuger 26 eingebunden ist. Nach dem Durchströmen des Abhitzedampferzeugers 26 tritt das Abgas über eine Abgasleitung durch einen Abgaskamin 27 nach aussen. Der Wasser-Dampf-Kreislauf 20 wird grundsätzlich gebildet aus der mit einem Generator 25 verbundenen Dampfturbine 21, einem Kondensator 22, einem Speisewasserkessel 24, einer Speisewasserpumpe 23 und dem Abhitzedampferzeuger 26.
Dem Wasser-Dampf-Kreislauf 20 wird zusätzlich Wärmeenergie aus dem Solarkreislauf 30 zugeführt, der aus dem Solarfeld 33 mit den Parabolrinnen-Kollektoren 37, einer Pumpe 31 und einem Wärmetauscher 32 gebildet wird. Selbstverständlich können dem Solarkreislauf 30 zusätzlich Speichermittel zum Speichern der Solarwärme für den Betrieb in sonnenlosen oder sonnenarmen Zeiten zugeordnet werden. Ebenso ist es denkbar, anstelle der Parabolrinnen-Kollektoren 37 mit Fresnelspiegeln ausgerüstete Kollektoren oder Heliostatenanlagen einzusetzen. Die Solarwärme kann an verschiedenen Stellen in den Wasser-Dampf-Kreislauf 20 eingeführt werden; daher ist in Fig. 1 stellvertretend für verschiedene Lösungen nur eine Verbindung 28 als Doppelpfeil zwischen dem Wärmetauscher 32 und dem Abhitzedampferzeuger 26 eingezeichnet.

Die bisherigen Untersuchungen und Studien haben bestätigt, dass derartige integrierte Solar-Kombikraftwerke sowohl technisch als auch ökonomisch machbar und sinnvoll sind und sich für die Ausnutzung der Sonnenenergie eignen, zumal auf bewährte Technologien zurückgegriffen werden kann. Tatsächlich haben integrierte Solar-Kombikraftwerke eine Reihe von Vorteilen, die nachfolgend aufgelistet sind:
- Für ein Kombikraftwerk vom Typ KA26 der Anmelderin, welches auf dem Einsatz von Gasturbinen des Typs GT26 basiert, kann der Gesamtwirkungsgrad von ungefähr 57% auf ungefähr 65% gesteigert werden, wobei der Beitrag der Solarenergie lediglich ungefähr 15% beträgt. Die CO2-Emissionen werden dadurch drastisch reduziert.
- Bereits vorhandene Komponenten aus herkömmlichen Kombikraftwerken (Combined Cycle Power Plants CCPP) können weitgehend zur Nutzung von Solardampf verwendet werden, wodurch die Elektrizitätskosten Leistung (Cost of Electricity CoE) im integrierten Solar-Kombikraftwerk (ISCC) gegenüber reinen Solarkraftwerken erheblich reduziert werden (von z.B. 300 €/MWh auf 180 €/MWh beim ISCC).
- Grosse Mengen an versorgungssicherer Leistung können 24h am Tag und 7 Tage in der Woche unabhängig von den klimatischen Bedingungen erzeugt werden.
- Das Kraftwerk ist bereits in Betrieb, wenn das Solarfeld Wärme abgibt, so dass die Solarenergie maximal ausgenutzt werden kann.

Im Stand der Technik sind bereits eine Vielzahl von Untersuchungen und Vorschläge gemacht worden, wie der in einem Solarfeld erzeugte Solardampf in ein Kombikraftwerk integriert werden kann:
- In den Druckschriften US 2006/0260314(A1) und US 2006/0174622(A1) werden Zwischenkreise vorgeschlagen, um mit der Wärme eines Solarfeldes Solardampf zu erzeugen.
- Andere untersuchen die ökonomischen und leistungsmässigen Aspekte der Integration von Parabolrinnen-Solarfeldern in ein Kombikraftwerk (Dersch et al., "Trough Integration into Power Plants", Energy, Vol. 29, S.947-959, 2004).
- Weiterhin wird vorgeschlagen, Dampf aus einem Solarfeld über einen Zwischenkreis zu erzeugen und eine Zusatzfeuerung (Supplementary Firing SF) einzusetzen, um die Laständerungen auszuregeln (Hosseini et al., "Technical & economic assessment of the ISCC power plants in Iran", Renewable Energy, vol. 30, S.1541-1555, 2005).
- Auch die WO 95/11371 (A1) schlägt den Einsatz einer Zusatzfeuerung für die Anpassung an Laständerungen vor.
- Insbesondere die US 2008/0127647(A1) beschreibt unter Rückgriff frühere Vorschläge (siehe oben) zahlreiche Möglichkeiten der Kombination von solaren und mit Gasturbinen ausgerüsteten Kombikraftwerken. Ziel ist es, den solaren Anteil am Kombikraftwerk zu maximieren und die gesamthaft abgegebene Leistung zu maximieren, indem bestehende oder nachgerüstete Anlagen, die mit überdimensionierten Abhitzedampferzeugern und Dampfturbinen ausgerüstet sind, mit hoher Zusatzfeuerung gefahren werden.

Während das Einbeziehen von Solardampf in ein Kombikraftwerk ohne Zweifel einen positiven Schritt in Richtung auf die Erhöhung der Leistungsabgabe und gleichzeitig die Reduzierung der CO2-Emissionen pro Leistungseinheit darstellt, haben interne Untersuchungen ergeben, dass die bekannten Lösungen im Hinblick auf eine effektive Brennstoffnutzung (und damit CO2-Vermeidung) und ökonomische Parameter (Elektrizitätskosten) nicht optimiert sind. Gerade diese Aspekte jedoch bestimmen massgeblich die Akzeptanz und Verwirklichung derartiger neuer Technologien, wie sie bei einem integrierten Solar-Kombikraftwerk vorliegen.

Wie bereits erwähnt, stützt sich der Stand der Technik auf eine Zusatzfeuerung, um die Last der Anlage anzupassen und/oder die abgegebene Leistung zu erhöhen. Eine Zusatzfeuerung bedingt jedoch das Verbrennen zusätzlichen Brennstoffs (z.B. mittels Kanalbrennern) im Abhitzedampferzeuger (Zusatzfeuerung 34 in Fig. 1), um zusätzlichen Dampf für die Stromerzeugung mit der Dampfturbine bereitzustellen. Während dadurch ohne Zweifel sowohl die Ausgangsleistung als auch die Flexibilität des Betriebs erhöht werden, zeigen thermodynamische Überlegungen, dass dadurch der Gesamtwirkungsgrad der Anlage verringert wird (weil die Zusatzwärme bei vergleichsweise niedrigen Temperaturen vorliegt). Daraus folgt, dass weder die spezifischen CO2-Emissionen noch die Brennstoffkosten minimiert werden. Zwar kann die Zusatzfeuerung die Elektrizitätserzeugung um etwa 10% steigern; gleichzeitig wird jedoch auch die spezifische Abgabe von CO2 bei einem typischen integrierten Solar-Kombikraftwerk um etwa 3% erhöht (350 kgCO2/MWh ohne Zusatzfeuerung, 360 kgCO2/MWh mit Zusatzfeuerung).

Der Stand der Technik postuliert die Überdimensionierung sowohl des Abhitzedampferzeugers (HRSG) als auch der Dampfturbine (um bis zu 50%), um den zusätzlichen Dampf aus dem Solarfeld und der Zusatzfeuerung verarbeiten zu können. Dadurch entstehen höhere Investitionskosten. Darüber hinaus verringert sich der Gesamtwirkungsgrad, wenn die Anlage nicht mit voller Leistung gefahren wird (d.h. wenn die Zusatzfeuerung und/oder die Solarwärme nicht volle 100% erreichen), weil der Betrieb nicht im Sollarbeitspunkt erfolgt.

Gerade die bereits erwähnte US 2008/0127647(A1) spricht sich ausschliesslich für die Umrüstung bestehender Anlagen aus, die bereits ein hohes Mass an Zusatzfeuerung (15-50%) aufweisen und einen überdimensionierten Abhitzedampferzeuger und eine überdimensionierte Dampfturbine einsetzen (d.h. der Abhitzedampferzeuger und die Dampfturbine sind für den Betrieb mit 100% Abgaswärme aus der Gasturbine und zusätzlich die Solarwärme und die Zusatzfeuerung ausgelegt).

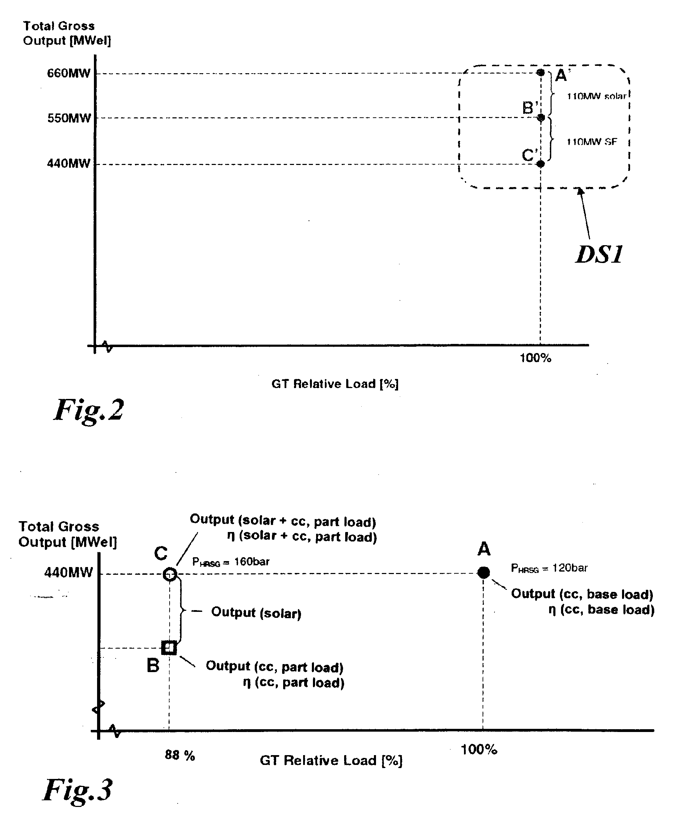

Fig. 2 zeigt für diesen Fall ein Diagramm der gesamten elektrischen Ausgangsleistung (Total Gross Output in MWₑₗ) über der relativen Last der Gasturbine (GT Relative Load in %). Durch eine gestrichelte Linie ist der vorgesehene Arbeitsbereich (Design Space) DS1 eingegrenzt. Obgleich die Anlage für die Aufnahme der Spitzenleistung von Solarfeld (+110MW) und Zusatzfeuerung (+110MW) ausgelegt sein muss (Arbeitspunkt A' in Fig. 2), wird die Anlage (wegen der Tag- und Nachtwechsel und Änderungen in den atmosphärischen bzw. Wetter-Bedingungen) nur selten 100% Solarwärme erhalten. Folge dieser Auslegung ist, dass jedes Mal, wenn weniger als 100% Solarwärme angeboten werden, die Anlage überdimensioniert ist und ausserhalb des vorgesehenen (optimalen) Arbeitspunktes (d.h. zwischen A' und C') arbeitet.

Obgleich die Solarenergie für sich genommen nichts kostet, sind die Ausrüstung, die Infrastruktur, das Land und die übrigen Erfordernisse (z.B. das Wasser zum Reinigen der Spiegel im Solarfeld) für die Nutzung der Solarenergie sehr teuer. Eine einfache Maximierung des Solarsystems eines integrierten Solar-Kombikraftwerks stellt daher nicht notwendigerweise eine optimale Lösung im Hinblick auf den Ausgleich zwischen Umweltschutz-, Leistungsfähigkeits- und ökonomischen Gesichtspunkten dar. Entsprechend maximieren die bisher beschriebenen Anlagen nicht den Wirkungsgrad bei gleichzeitiger Minimierung der ökonomischen und Umwelt-Kosten, und nutzen damit auch nicht das volle Potential der Solarenergie aus. Tatsächlich streben die bisherigen Lösungen lediglich nach einer Maximierung des solaren Anteils.

### DARSTELLUNG DER ERFINDUNG

Es ist daher Aufgabe der Erfindung, ein Verfahren zum Betrieb eines integrierten Solar-Kombikraftwerks anzugeben, welches die Nachteile bekannter Verfahren vermeidet und sich insbesondere durch eine gleichrangige Berücksichtung von ökonomischen, Leistungs- und Umweltgesichtspunkten auszeichnet, sowie ein integrierten Solar-Kombikraftwerk zur Durchführung des Verfahrens anzugeben.

Die Aufgabe wird durch die Gesamtheit der Merkmale der Ansprüche 1 und 7 gelöst. Wesentlich für das erfindungsgemässe Verfahren ist, dass der Wasser-Dampf-Kreislauf nur für die Volllast der Gasturbine ausgelegt ist, und dass bei Einspeisung von zusätzlicher Leistung aus dem Solarfeld in den Wasser-Dampf-Kreislauf die Last der Gasturbine nach Massgabe der zusätzlich eingespeisten Leistung aus dem Solarfeld jeweils so weit reduziert wird, dass die gesamte Ausgangsleistung des integrierten Solar-Kombikraftwerks im Wesentlichen konstant bleibt.

Eine Ausgestaltung des erfindungsgemässen Verfahrens ist dadurch gekennzeichnet, dass beim Herunterfahren des integrierten Solar-Kombikraftwerks auf Teillast die zusätzlich eingespeiste Leistung aus dem Solarfeld beibehalten und die Last der Gasturbine entsprechend reduziert wird.

Vorzugsweise wird jeweils die Volllast des Solarfelds in den Wasser-Dampf-Kreislauf eingespeist, wobei mit Vorteil als Volllast des Solarfelds eine mittlere, im Tagesablauf zur Verfügung stehende Leistung aus dem Solarfeld genommen wird.

Eine andere Ausgestaltung des Verfahrens nach der Erfindung zeichnet sich dadurch aus, dass für die Dampferzeugung im Wasser-Dampf-Kreislauf eine Zusatzfeuerung vorgesehen ist, und dass die Zusatzfeuerung nur temporär in Übergangsphasen eingesetzt wird.

Vorzugsweise wird beim erfindungsgemässen Verfahren als Gasturbine eine Gasturbine mit sequentieller Verbrennung eingesetzt, da diese selbst einen hohen Wirkungsgrad insbesondere bei Teillast aufweist.

Das erfindungsgemässe Solar-Kombikraftwerk umfasst einen Wasser-Dampf-Kreislauf mit einer Dampfturbine und einem Abhitzedampferzeuger, der von den heissen Abgasen einer Gasturbine durchströmt wird, wobei dem Wasser-Dampf-Kreislauf zusätzlich Wärme von einem Solarfeld zugeführt wird. Es zeichnet sich dadurch aus, dass der Wasser-Dampf-Kreislauf nur für die Volllast der Gasturbine ausgelegt ist, und dass für die Gasturbine eine Steuerung vorgesehen ist, welche die Last der Gasturbine nach Massgabe der zusätzlich eingespeisten Leistung aus dem Solarfeld jeweils so steuert, dass die gesamte Ausgangsleistung des integrierten Solar-Kombikraftwerks im Wesentlichen konstant bleibt.

Eine Ausgestaltung des erfindungsgemässen Solar-Kombikraftwerks ist dadurch gekennzeichnet, dass die Gasturbine eine Gasturbine mit sequentieller Verbrennung ist.

Vorzugsweise sind der Wasser-Dampf-Kreislauf und das Solarfeld so ausgelegt, dass die Ausgangsleistung des Solar-Kombikraftwerks bei Volllast der Gasturbine und ohne zusätzliche Leistung aus dem Solarfeld dieselbe ist, wie bei Volllast des Solarfelds und nur 85-90% der Volllast der Gasturbine.

Eine andere Ausgestaltung zeichnet sich dadurch aus, dass das Solarfeld aus Parabolrinnen-Kollektoren aufgebaut ist, und dass Massnahmen zur Erhöhung der Frischdampftemperatur im Wasser-Dampf-Kreislauf vorgesehen sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: den prinzipiellen Aufbau eines integrierten Solar-Kombikraftwerks, wie es der vorliegenden Erfindung zugrunde gelegt werden kann;
- Fig. 2: in einem Diagramm von Ausgangsleistung des integrierten Solar-Kombikraftwerks über der Last der Gasturbine die Arbeitspunkte und den Arbeitsbereich bei herkömmlichen Anlagen mit Zusatzfeuerung;
- Fig. 3: ein zu Fig. 2 vergleichbares Diagramm für ein Verfahren und eine Anlage gemäss einem Ausführungsbeispiel der Erfindung;
- Fig. 4: in einem Diagramm gemäss Fig. 2 im Vergleich die Arbeitsbereiche und Arbeitspunkte gemäss Fig. 2 und 3; und
- Fig. 5: eine beispielhafte Steuerung der Gasturbine zur Durchführung des Verfahrens nach der Erfindung.

### WEGE ZUR AUSFÜHRUNG DER ERFINDUNG

Die Erfindung befasst sich mit einem neuen Konzept der Auslegung von integrierten Solar-Kombikraftwerken, das den Gesamtwirkungsgrad maximiert (niedrigster CO2-Ausstoss pro MW) und gleichzeitig die Gesamtkosten minimiert (Minimum der Elektrizitätskosten CoE).

Kern des Konzeptes ist effizienteste Ausnutzung der solaren Wärme und des Brennstoffs (Erdgas) im Hinblick auf Leistung, Wirkungsgrad und ökonomische Grössen. Dies wird durch die folgenden Massnahmen erreicht:
- Der Einsatz einer Zusatzfeuerung im Dauerbetrieb wird immer vermieden. Die Zusatzfeuerung (34) wird allenfalls temporär in Übergangsphasen eingesetzt.
- Der Wasser-Dampf-Kreislauf (20) wird für einen geringeren Spitzendruck im Abhitzedampferzeuger (26) bei 100% Last der Gasturbine (11) ausgelegt (z.B. für ungefähr 120bar oder ca. 75% des Standard-Volllast-Drucks). Der entsprechende Arbeitspunkt ist in Fig. 3 mit dem Bezugszeichen A eingetragen. Dies entspricht im Ergebnis einer sehr geringen Überdimensionierung. Es werden jedoch Generator, Welle, Dampfturbine, Transformatoren und Hochspannungsschaltfeld in Standardausführung eingesetzt, d.h. diese sind nicht überdimensioniert.
- Der Wasser-Dampf-Kreislauf (20) wird gemäss Fig. 3 für 100% Solarwärme und 85-90% Last der Gasturbine ausgelegt. Dies entspricht dem mit C bezeichneten Arbeitspunkt in Fig. 3 (der bei 88% Gasturbinenleistung eingezeichnet ist).
- Das Solarfeld (33) ist nicht auf maximale Grösse ausgelegt, sondern so, dass die Kosten der solar erzeugten Elektrizität minimiert werden.
- Die solar erzeugte Leistung und die Leistung der Gasturbinen-Dampfturbinen-Kombianlage (CCPP) werden so eingestellt, dass sich eine annähernd konstante Ausgangsleistung bei Volllast ergibt (die Ausgangsleistung zwischen den Punkten C und A in Fig. 3 ist näherungsweise konstant, d.h. die Ausgangsleistung des Kombikraftwerks bei Volllast Output(cc, base load) bei Punkt A, die Ausgangsleistung des Kombikraftwerks mit integriertem Solarfeld Output(solar+cc, part load) bei Punkt C sowie die Ausgangsleistungen Output (solar+cc, part load) bei Gasturbinen-Lastpunkten zwischen Punkt A und C sind näherungsweise gleich, wie mit der gestrichelten Linie angedeutet). Änderungen in der solar erzeugten Leistung Output (solar) werden durch entsprechende Laständerungen bei der Gasturbine kompensiert. Im Extremfall (z.B. in der Nacht und ohne Speicher), wird die Anlage mit 100% Last der Gasturbine betrieben. Soll die Anlage nur mit Teillast gefahren werden, wird der Solaranteil in vollem Umfang beibehalten und nur die Leistung der Gasturbine reduziert. Dieses Konzept kann als "Gasturbinenregelung" bezeichnet werden.
- Die solare Volllast muss nicht der maximal möglichen solaren Leistung des Solarfeldes entsprechen. Vielmehr kann sie der am Tage erreichbaren mittleren Leistung entsprechen. Die maximal mögliche solare Leistung des Solarfeldes wird nur für einen begrenzten Zeitabschnitt der Gesamtzeit erreicht. Mit der mittleren Leistung als Referenzgrösse arbeitet die Anlage für einen grösseren Zeitraum näher an ihrem Sollarbeitspunkt.

Der Vorteil des erfindungsgemässen Konzeptes wird anhand der Fig. 3 deutlich:
- Eine konstante Ausgangsleistung kann immer durch einfache Regelung der Gasturbine erreicht werden.
- Der Gesamtwirkungsgrad verändert sich als Funktion der Last der Gasturbine nur geringfügig. Beispielsweise liegt der Wirkungsgrad η(cc, part load) bei Punkt B lediglich um 0.1 % tiefer als der Wirkungsgrad η(cc, base load) bei Punkt A. Der Wirkungsgrad der Anlage springt in die Höhe, wenn die volle solare Leistung eingesetzt wird. Beispielsweise erreicht der Wirkungsgrad n(solar+cc, part load) bei Punkt C ein um 6.5% höheren Wert im Vergleich zum Wirkungsgrad η(cc, base load) bei Punkt A.

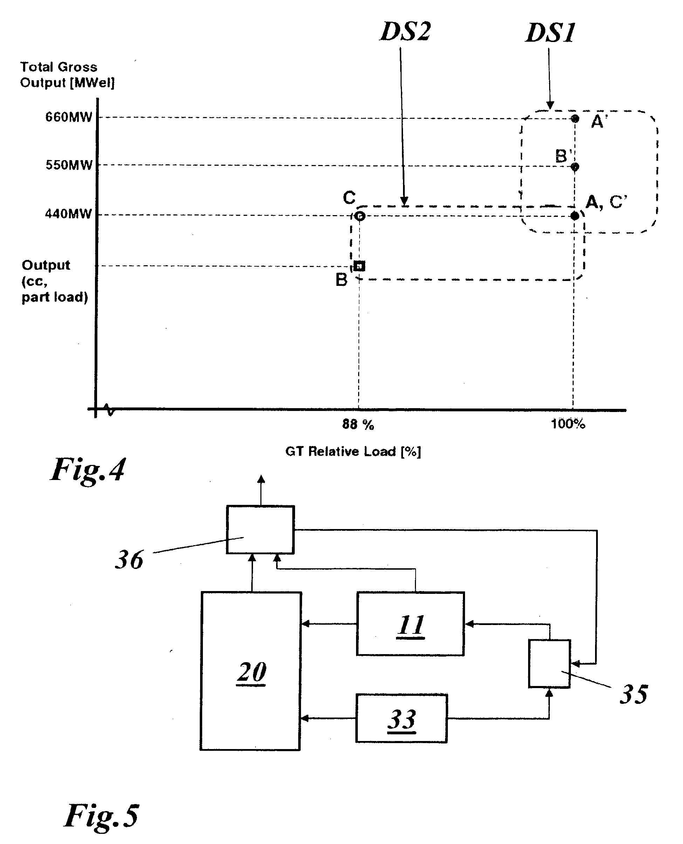

Der Vorteil des erfindungsgemässen Konzeptes wird noch deutlicher im direkten Vergleich mit herkömmlichen Lösungen. Fig. 4 zeigt, dass ein Wasser-Dampf-Kreislauf herkömmlicher Art zwar für den Punkt A' im Arbeitsbereich DS1 ausgelegt ist (d.h. 100% Gasturbinenlast + 100% solar + 100% Zusatzfeuerung), dass er jedoch über einen erheblichen Teil der Zeit (ungefähr 50%) wegen mangelnder Solarenergie nur im Punkt B' arbeitet. Wenn auch noch die den Wirkungsgrad verringernde Zusatzfeuerung abgestellt wird, arbeitet die herkömmliche Anlage im Punkt C', was wegen der höheren Anlagenkosten zu höheren Elektrizitätskosten führt.

Die vorliegende Erfindung schlägt demgegenüber eine Auslegung der Anlage vor, die einen kleineren Bereich der Ausgangsleistung abdeckt (Arbeitsbereich DS2 in Fig. 4), dafür aber höhere Gesamtwirkungsgrade und geringere Elektrizitätskosten zur Folge hat.

Ein weiterer Vorteil des hier vorgeschlagenen neuen Konzeptes ist, dass - wenn eine Gasturbine mit sequentieller Verbrennung eingesetzt wird, wie sie in Fig. 1 gezeigt ist - die Turbineneinlasstemperatur (Turbine Inlet Temperature TIT) nach der zweiten Brennkammer (16 in Fig. 1) abnimmt, wenn die Last der Gasturbine von 100% auf 88% reduziert wird. Dies bedeutet, dass die thermische Belastung der Brennkammer und der Turbine (17 in Fig. 1) verringert und deren Lebensdauer erhöht werden, wenn gemäss Fig. 3 zunehmend Solarwärme in den Prozess eingeführt wird.

In Fig. 5 ist eine beispielhafte Steuerung der Gasturbine zur Durchführung des Verfahrens nach der Erfindung wiedergegeben: Der Wasser-Dampf-Kreislauf 20 erhält sowohl von der Gasturbine 11 als auch von dem Solarfeld 33 Wärme und gibt am Ausgang elektrische Leistung ab. Die Gasturbine 11 mit ihrem Generator erzeugt ebenfalls elektrische Leistung. Beide Leistungen werden mit einem Leistungsaufnehmer 36 gemessen und die Werte an eine Steuerung 35 der Gasturbine 11 weitergegeben. Zugleich erhält die Steuerung 35 vom Solarfeld 33 Werte der dort anstehenden Solarwärme. Die Steuerung 35 sorgt nun dafür, dass bei ansteigender Solarwärme die Last der Gasturbine 11 abgesenkt wird, und umgekehrt, wobei die Ausgangsleistung insgesamt im Wesentlichen konstant gehalten wird.

Ein erheblicher Anteil der solar bedingten Kosten können dem Wärmetauscher (32 in Fig. 1) zugeschrieben werden, der das Bindeglied zwischen Solarfeld und Wasser-Dampf-Kreislauf bildet. Bei der Betrachtung der solaren Elektrizitätskosten, d.h. der Kosten, die durch die zusätzlichen Anlagenteile für die Solarwärmegewinnung und -verarbeitung entstehen, muss berücksichtigt werden, dass wegen der schnell steigenden Kosten für den Wärmetauscher der Beitrag der Solarenergie zum integrierten Solar-Kombikraftwerk begrenzt werden sollte. Diese Grenze liegt deutlich niedriger als bei den im Stand der Technik vorgeschlagenen Lösungen.

Wenn im Solarfeld (33 in Fig. 1) Parabolrinnen-Kollektoren (37) eingesetzt werden, die im Solarkreislauf (30) von Thermoöl durchflossen sind, kann im Hochdruck-Überhitzer des Abhitzedampferzeugers (26) Solardampf mit einer Temperatur von 380°C zugeführt werden. Dadurch wird jedoch die Temperatur des Frischdampfs am Eingang der Dampfturbine (21) um über 80°C abgesenkt, was den Anlagenwirkungsgrad senkt und die Elektrizitätskosten erhöht. Es ist daher von Vorteil, wenn die Frischdampftemperatur auf 580°C erhöht wird. Um dies zu erreichen, sollte die Oberfläche im Hochdruckabschnitt des Abhitzedampferzeugers entsprechend vergrössert werden.

Weiterhin ist es von Vorteil, wenn die Anlage - sofern Gasturbinen mit sequentieller Verbrennung zum Einsatz kommen - während der Nacht im Niedriglastbetrieb (Low Load Operational Concept LLOC) gefahren wird. Hierdurch wird der Verbrauch von Brennstoff zur Erzeugung von Elektrizität vermieden, wenn deren Verkaufspreis niedrig ist. Die Ausgangsleistung kann dann sehr schnell hochgefahren werden, sobald (am Tag) wieder Solarenergie zur Verfügung steht.

Weiterhin ist es auch denkbar, die Anlage für 100% Last im Gasturbinen-Dampfturbinen-Kombikraftwerks-Teil plus der zusätzlichen Solarenergie auszulegen ("Solar Boost"). Die Anlagenkomponenten (Generator, Welle, Transformatoren, Hochspannungsschaltfeld) sind dann für eine höhere Leistung ausgelegt.

Neben der Gasturbinenregelung gemäss Fig. 3 kommt dann auch eine Regelung über die Zusatzfeuerung zum Einsatz, mit sanften Übergängen zwischen beiden Regelungsarten.

### BEZUGSZEICHENLISTE

- 10: integriertes Solar-Kombikraftwerk (ISCC)
- 11: Gasturbine
- 12: Lufteinlass
- 13a,13b: Verdichter
- 14,16: Brennkammer
- 15,17: Turbine
- 18: Welle
- 19,25: Generator
- 20: Wasser-Dampf-Kreislauf
- 21: Dampfturbine
- 22: Kondensator
- 23: Speisewasserpumpe
- 24: Speisewasserkessel
- 26: Abhitzedampferzeuger (HRSG)
- 27: Abgaskamin
- 28: Verbindung
- 29: Abgasleitung
- 30: Solarkreislauf
- 31: Pumpe
- 32: Wärmetauscher
- 33: Solarfeld
- 34: Zusatzfeuerung
- 35: Steuerung
- 36: Leistungsaufnehmer
- 37: Parabolrinnen-Kollektor
- DS1,DS2: Arbeitsbereich

## Patentansprüche

1. Verfahren zum Betrieb eines integrierten Solar-Kombikraftwerks (10), welches einen Wasser-Dampf-Kreislauf (20) mit einer Dampfturbine (21) und einem Abhitzedampferzeuger (26) umfasst, der von den heissen Abgasen einer Gasturbine (11) durchströmt wird, wobei dem Wasser-Dampf-Kreislauf (20) zusätzlich Wärme von einem Solarfeld (33) zugeführt wird, **dadurch gekennzeichnet, dass** der Wasser-Dampf-Kreislauf (20) nur für die Volllast der Gasturbine (11) ausgelegt ist, und dass bei Einspeisung von zusätzlicher Leistung aus dem Solarfeld (33) in den Wasser-Dampf-Kreislauf (20) die Last der Gasturbine (11) nach Massgabe der zusätzlich eingespeisten Leistung aus dem Solarfeld (33) jeweils so weit reduziert wird, dass die gesamte Ausgangsleistung des integrierten Solar-Kombikraftwerks (10) im Wesentlichen konstant bleibt.

2. Verfahren nach Anspruch 1, **dadurch gekennzeichnet, dass** beim Herunterfahren des integrierten Solar-Kombikraftwerks (10) auf Teillast die zusätzlich eingespeiste Leistung aus dem Solarfeld (33) beibehalten und die Last der Gasturbine (11) entsprechend reduziert wird.

3. Verfahren nach Anspruch 1 oder 2, **dadurch gekennzeichnet, dass** jeweils die Volllast des Solarfelds (33) in den Wasser-Dampf-Kreislauf (20) eingespeist wird.

4. Verfahren nach Anspruch 3, **dadurch gekennzeichnet, dass** als Volllast des Solarfelds (33) eine mittlere, im Tagesablauf zur Verfügung stehende Leistung aus dem Solarfeld (33) genommen wird.

5. Verfahren nach einem der Ansprüche 1 bis 4, **dadurch gekennzeichnet, dass** für die Dampferzeugung im Wasser-Dampf-Kreislauf (20) eine Zusatzfeuerung (34) vorgesehen ist, und dass die Zusatzfeuerung (34) nur temporär in Übergangsphasen eingesetzt wird.

6. Verfahren nach einem der Ansprüche 1 bis 5, **dadurch gekennzeichnet, dass** als Gasturbine (11) eine Gasturbine mit sequentieller Verbrennung (14-17) eingesetzt wird.

7. Solar-Kombikraftwerk (10) zur Durchführung des Verfahrens nach einem der Ansprüche 1 bis 6, welches Solar-Kombikraftwerk (10) einen Wasser-Dampf-Kreislauf (20) mit einer Dampfturbine (21) und einem Abhitzedampferzeuger (26) umfasst, der von den heissen Abgasen einer Gasturbine (11) durchströmt wird, wobei dem Wasser-Dampf-Kreislauf (20) zusätzlich Wärme von einem Solarfeld (33) zugeführt wird, **dadurch gekennzeichnet, dass** der Wasser-Dampf-Kreislauf (20) nur für die Volllast der Gasturbine (11) ausgelegt ist, und dass für die Gasturbine (11) eine Steuerung (35) vorgesehen ist, welche die Last der Gasturbine (11) nach Massgabe der zusätzlich eingespeisten Leistung aus dem Solarfeld (33) jeweils so steuert, dass die gesamte Ausgangsleistung des integrierten Solar-Kombikraftwerks (10) im Wesentlichen konstant bleibt.

8. Solar-Kombikraftwerk nach Anspruch 7, **dadurch gekennzeichnet, dass** die Gasturbine (11) eine Gasturbine mit sequentieller Verbrennung (14-17) ist.

9. Solar-Kombikraftwerk nach Anspruch 7 oder 8, **dadurch gekennzeichnet, dass** der Wasser-Dampf-Kreislauf (20) und das Solarfeld (33) so ausgelegt sind, dass die Ausgangsleistung des Solar-Kombikraftwerks (10) bei Volllast der Gasturbine (11) und ohne zusätzliche Leistung aus dem Solarfeld (33) dieselbe ist, wie bei Volllast des Solarfelds und nur 85-90% der Volllast der Gasturbine (11).

10. Solar-Kombikraftwerk nach einem der Ansprüche 7 bis 8, **dadurch gekennzeichnet, dass** das Solarfeld (33) aus Parabolrinnen-Kollektoren (37) aufgebaut ist, und dass Massnahmen zur Erhöhung der Frischdampftemperatur im Wasser-Dampf-Kreislauf (20) vorgesehen sind.

## Claims

1. Method for operation of an integrated solar combined-cycle power station (10), which comprises a water/steam circuit (20) having a steam turbine (21) and a heat recovery steam generator (26) through which the hot exhaust gases from a gas turbine (11) flow, wherein the water/steam circuit (20) is additionally supplied with heat from a solar array (33), **characterized in that** the water/steam circuit (20) is designed only for the full load on the gas turbine (11), and **in that**, when feeding additional power from the solar array (33) into the water/steam circuit (20), the load on the gas turbine (11) is in each case reduced, on the basis of the power additionally fed in from the solar array (33), to such an extent that the total output power of the integrated solar combined-cycle power station (10) remains substantially constant.

2. Method according to Claim 1, **characterized in that**, when the integrated solar combined-cycle power station (10) is being run down to partial load, the power additionally fed in from the solar array (33) is maintained, and the load on the gas turbine (11) is correspondingly reduced.

3. Method according to Claim 1 or 2, **characterized in that** the full load on the solar array (33) is in each case fed into the water/steam circuit (20).

4. Method according to Claim 3, **characterized in that** a mean power which is available over the course of the day is drawn from the solar array (33) as the full load on the solar array (33).

5. Method according to one of Claims 1 to 4, **characterized in that** supplementary firing (34) is provided for steam generation in the water/steam circuit (20), and **in that** the supplementary firing (34) is used only temporarily in transitional phases.

6. Method according to one of Claims 1 to 5, **characterized in that** a gas turbine with sequential combustion (14-17) is used as the gas turbine (11).

7. Solar combined-cycle power station (10) for carrying out the method according to one of Claims 1 to 6, which solar combined-cycle power station (10) comprises a water/steam circuit (20) with a steam turbine (21) and a heat recovery steam generator (26), through which the hot exhaust gases from a gas turbine (11) flow, wherein heat is additionally supplied to the water/steam circuit (20) from a solar array (33), **characterized in that** the water/steam circuit (20) is designed only for the full load on the gas turbine (11), and **in that** a controller (35) is provided for the gas turbine (11), which controller (35) controls the load on the gas-turbine (11) in each case, on the basis of the power additionally fed in from the solar array (33), such that the total output power of the integrated solar combined-cycle power station (10) remains substantially constant.

8. Solar combined-cycle power station according to Claim 7, **characterized in that** the gas turbine (11) is a gas turbine with sequential combustion (14-17).

9. Solar combined-cycle power station according to Claim 7 or 8, **characterized in that** the water/steam circuit (20) and the solar array (33) are designed such that the output power of the solar combined-cycle power station (10) is the same at full load on the gas turbine (11) and without any additional power from the solar array (33) at full load on the solar array and only 85-90% of full load on the gas turbine (11).

10. Solar combined-cycle power station according to one of Claims 7 and 8, **characterized in that** the solar array (33) is formed from parabolic groove collectors (37), and **in that** measures are provided to increase the fresh-steam temperature in the water/steam circuit (20).

## Revendications

1. Procédé de fonctionnement d'une centrale solaire combinée intégrée (10) qui comprend un circuit eau-vapeur (20) avec une turbine à vapeur (21) et un générateur de vapeur à chaleur perdue (26) qui est parcouru par les gaz d'échappement chauds d'une turbine à gaz (11), de la chaleur provenant d'un champ solaire (33) étant en outre acheminée au circuit eau-vapeur (20), **caractérisé en ce que** le circuit eau-vapeur (20) est conçu uniquement pour la pleine charge de la turbine à gaz (11) et **en ce que** lors de l'injection de puissance supplémentaire provenant du champ solaire (33) dans le circuit eau-vapeur (20), la charge de la turbine à gaz (11) est à chaque fois réduite en fonction de la puissance injectée supplémentaire provenant du champ solaire (33) dans une mesure telle que la puissance de sortie totale de la centrale solaire combinée intégrée (10) reste essentiellement constante.

2. Procédé selon la revendication 1, **caractérisé en ce que** dans le cas d'un fonctionnement réduit à une charge partielle de la centrale solaire combinée intégrée (10), la puissance supplémentaire injectée provenant du champ solaire (33) est conservée et la charge de la turbine à gaz (11) est réduite de manière correspondante.

3. Procédé selon la revendication 1 ou 2, **caractérisé en ce que** dans chaque cas, la pleine charge du champ solaire (33) est injectée dans le circuit eau-vapeur (20).

4. Procédé selon la revendication 3, **caractérisé en ce qu'**en tant que pleine charge du champ solaire (33), une puissance moyenne disponible au cours de la journée est prélevée du champ solaire (33).

5. Procédé selon l'une quelconque des revendications 1 à 4, **caractérisé en ce que** pour la génération de vapeur dans le circuit eau-vapeur (20), il est prévu un foyer d'appoint (34) et **en ce que** le foyer d'appoint (34) n'est utilisé que temporairement dans des phases de transition.

6. Procédé selon l'une quelconque des revendications 1 à 5, **caractérisé en ce que** l'on utilise en tant que turbine à gaz (11) une turbine à gaz à combustion séquentielle (14-17).

7. Centrale solaire combinée (10) pour mettre en oeuvre le procédé selon l'une quelconque des revendications 1 à 6, laquelle centrale solaire combinée (10) comprend un circuit eau-vapeur (20) avec une turbine à vapeur (21) et un générateur de vapeur à chaleur perdue (26) qui est parcouru par les gaz d'échappement chauds d'une turbine à gaz (11), de la chaleur provenant d'un champ solaire (33) étant en outre acheminée au circuit eau-vapeur (20), **caractérisée en ce que** le circuit eau-vapeur (20) est conçu uniquement pour la pleine charge de la turbine à gaz (11) et **en ce qu'**une commande (35) est prévue pour la turbine à gaz (11), laquelle commande la charge de la turbine à gaz (11) en fonction de la puissance supplémentaire injectée provenant du champ solaire (33) à chaque fois de telle sorte que la puissance en sortie totale de la centrale solaire combinée intégrée (10) reste essentiellement constante.

8. Centrale solaire combinée selon la revendication 7, **caractérisée en ce que** la turbine à gaz (11) est une turbine à gaz à combustion séquentielle (14-17).

9. Centrale solaire combinée selon la revendication 7 ou 8, **caractérisée en ce que** le circuit eau-vapeur (20) et le champ solaire (33) sont conçus de telle sorte que la puissance de sortie de la centrale solaire combinée (10), pour une pleine charge de la turbine à gaz (11) et sans puissance supplémentaire provenant du champ solaire (33), soit la même que dans le cas de la pleine charge du champ solaire et de seulement 85-90 % de la pleine charge de la turbine à gaz (11).

10. Centrale solaire combinée selon l'une quelconque des revendications 7 à 8, **caractérisée en ce que** le champ solaire (33) est constitué de collecteurs à canaux paraboliques (37) et **en ce que** des mesures sont prévues pour augmenter la température de la vapeur fraîche dans le circuit eau-vapeur (20).
